# EUROPEAN PATENT APPLICATION

(11) **EP 4 397 552 A2**
(43) Date of publication of application: **10.07.2024**
(21) Application number: 24155514.3
(22) Date of filing: 08.11.2021
(51) Int. Cl.: B60W 10/06

(54) **CONTROL DEVICE AND CONTROL METHOD FOR RIDER ASSISTANCE SYSTEM**

(30) Priority: 23.12.2020 JP 2020214074
(62) Divisional of application: 21819204.5
(71) Applicant: Robert Bosch GmbH, 70442 Stuttgart (DE)
(72) Inventor: PFAU, Lars, Yokohama-shi, 224-8501 (JP)
(74) Representative: Isarpatent

(57) **Abstract**

The present disclosure provides a controller for a first rider-assistance system (110) of a first straddle-type vehicle (200) comprising an execution section that is configured to cause the first rider-assistance system (110) to execute a rider-assistance operation and a communication section that is configured to receive information from a second rider-assistance system (10) of a second straddle-type vehicle (100) directly or indirectly by wireless communication, the information being based on surrounding environment information of the second straddle-type vehicle (100), wherein the execution section causes the first rider-assistance system (110) to execute the rider-assistance operation in response to the information received by the communication section, and wherein the second straddle-type vehicle (100) is a vehicle that is traveling behind or in front of the first straddle-type vehicle (200) in a group.

## Description

### TECHNICAL FIELD

The present disclosure relates to a controller and a control method for a rider-assistance system that assists a rider in driving a straddle-type vehicle to which a surrounding environment detector for detecting position-related information of a target object in the surroundings is not mounted, and to a controller and a control method for a rider-assistance system that assists a rider in driving a straddle-type vehicle to which a surrounding environment detector for detecting position-related information of a target object in the surroundings is mounted.

### BACKGROUND

As a conventional straddle-type vehicle, a straddle-type vehicle, to which a surrounding environment detector for detecting position-related information of a target object in the surroundings is mounted, is available. Surrounding environment information of the straddle-type vehicle is acquired based on output of the surrounding environment detector. Based on the surrounding environment information, a controller in a rider-assistance system executes rider-assistance operation to assist the rider in driving the straddle-type vehicle (for example, see PTL 1).

### Citation List

### Patent Literature

PTL 1: JP 2009-116882 A

### SUMMARY

### Issues to be Solved

Since the straddle-type vehicle has a small body as compared to other types of vehicles (such as an automobile and a truck), it is difficult to secure a mounting space for the surrounding environment detector. That is, it is necessary to provide a method for assisting the rider in driving the straddle-type vehicle that cannot have the surrounding environment detector.

The present disclosure addresses the above-described issues and it is an objective of the present disclosure to provide a controller and a control method capable of assisting a rider in driving a straddle-type vehicle that may not be able to mount a surrounding environment detector.

### Solutions to the Issues

The present invention provides a controller for a first rider-assistance system of a first straddle-type vehicle with the features of claim 1, a controller for a second rider-assistance system of a second straddle-type vehicle that has a surrounding environment detector configured to detect position-related information of a target object in surroundings with the features of claim 10, a control method for a first rider-assistance system of a first straddle-type vehicle with the features of claim 11 and a control method for a second rider-assistance system of a second straddle-type vehicle having a surrounding environment detector that is configured to detect position-related information of a target object in surroundings with the features of claim 12.

### Effects of the Present Disclosure

In the controller and the control method according to the present disclosure, the information based on the surrounding environment information of the other straddle-type vehicle is transmitted from the other rider-assistance system, which assists the other rider in driving the other straddle-type vehicle to which the surrounding environment detector is mounted, to the controller of the rider-assistance system, which assists the rider in driving the straddle-type vehicle to which the surrounding environment detector is not mounted. Therefore, it is possible to assist the rider in driving the straddle-type vehicle to which the surrounding environment detector is not mounted.

### DRAWINGS

Fig. 1 is a view for explaining a configuration of a comprehensive assistance system according to an embodiment of the present disclosure.
Fig. 2 is a diagram for explaining the configuration of the comprehensive assistance system according to the embodiment of the present disclosure.
Fig. 3 is a view for explaining an example of a function of the comprehensive assistance system according to the embodiment of the present disclosure.
Fig. 4 is a view for explaining an example of the function of the comprehensive assistance system according to the embodiment of the present disclosure.
Fig. 5 is a view for explaining an example of the function of the comprehensive assistance system according to the embodiment of the present disclosure.
Fig. 6 is a view for explaining an example of the function of the comprehensive assistance system according to the embodiment of the present disclosure.
Fig. 7 is a view for explaining an example of the function of the comprehensive assistance system according to the embodiment of the present disclosure.
Fig. 8 is a chart for explaining an example of operation of the comprehensive assistance system according to the embodiment of the present disclosure.

### DETAILED DESCRIPTION

A description will hereinafter be made on a controller and a control method according to the present disclosure with reference to the drawings.

A term "straddle-type vehicle" means a vehicle in general that a rider straddles. The straddle-type vehicles include motorcycles (a two-wheeled motor vehicle and a three-wheeled motor vehicle), an all-terrain vehicle, a pedal-driven vehicle, and the like. The motorcycles include: the two-wheeled motor vehicle or the three-wheeled motor vehicle that has an engine as a propelling source; the two-wheeled motor vehicle or the three-wheeled motor vehicle that has an electric motor as the propelling source; and the like, and examples of the motorcycle are a bike, a scooter, and an electric scooter. The pedal-driven vehicle means a vehicle in general that can travel forward on a road by a depression force applied to pedals by a rider. The pedal-driven vehicles include a normal pedal-driven vehicle, an electrically-assisted pedal-driven vehicle, an electric pedal-driven vehicle, and the like.

A configuration, action, and the like, which will be described below, merely constitute one example. The controller and a control method according to the present disclosure are not limited to a case with such a configuration, such action, and the like. The same or similar description will appropriately be simplified or will not be made below. There is a case where devices or portions having the same or similar functions are denoted by the same reference sign. A detailed structure will appropriately be illustrated in a simplified manner or will not be illustrated.

### Embodiment

A description will hereinafter be made on a comprehensive assistance system according to an embodiment.

### <Configuration of Comprehensive Assistance System>

A description will be made on a configuration of the comprehensive assistance system according to the embodiment.

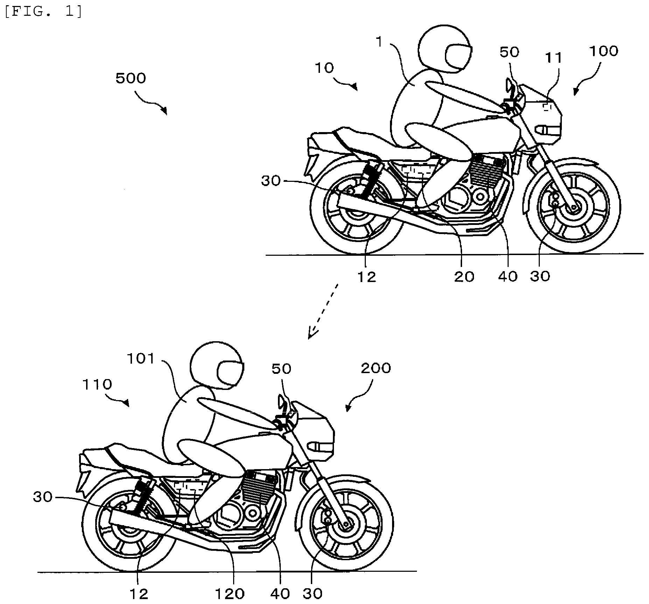

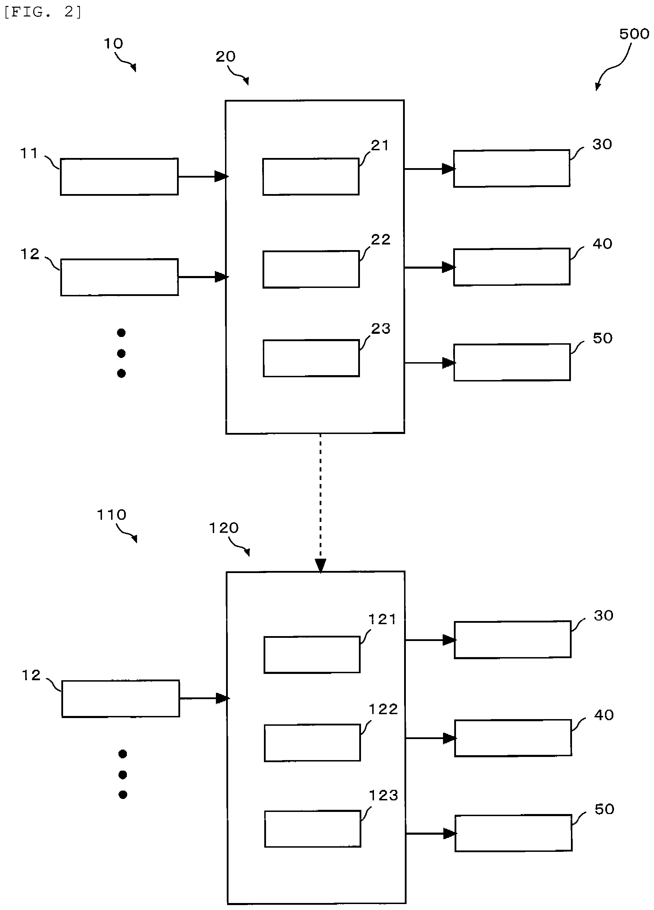

Fig. 1 and Fig. 2 are views for explaining the configuration of the comprehensive assistance system according to the embodiment of the present disclosure.

As illustrated in Fig. 1 and Fig. 2, a comprehensive assistance system 500 includes: a rider-assistance system 10 that assists a rider 1 in driving a straddle-type vehicle 100 to which a surrounding environment detector 11 is mounted (hereinafter referred to as a "mounted straddle-type vehicle 100"); and a rider-assistance system 110 that assists a rider 101 in driving a straddle-type vehicle 200 to which the surrounding environment detector is not mounted (hereinafter referred to as an "unmounted straddle-type vehicle 200"). In the mounted straddle-type vehicle 100, the unmounted straddle-type vehicle 200 is preferably set as a vehicle that travels therewith in a group, in the unmounted straddle-type vehicle 200, the mounted straddle-type vehicle 100 is preferably set as a vehicle that travels therewith in the group, or both of these settings are preferably made. The comprehensive assistance system 500 may include the plural rider-assistance systems 10, each of which corresponds to respective one of the plural mounted straddle-type vehicles 100, or may include the plural rider-assistance systems 110, each of which corresponds to respective one of the plural unmounted straddle-type vehicles 200.

The rider-assistance system 10 includes: a travel state detector 12 that detects travel state information of the mounted straddle-type vehicle 100; and a controller (ECU) 20. The rider-assistance system 110 includes: the travel state detector 12 that detects travel state information of the unmounted straddle-type vehicle 200; and a controller (ECU) 120. Each of the controller 20 and the controller 120 may receive detection results of various detectors that detect other types of information.

The rider-assistance system 10 executes rider-assistance operation to assist with the rider 1 of the mounted straddle-type vehicle 100 by using surrounding environment information of the mounted straddle-type vehicle 100, and the surrounding environment information is acquired based on output of the surrounding environment detector 11. The controller 20 receives the detection results of the various detectors (not illustrated) that output the other types of the information (for example, information on a brake operation state by the rider 1, information on an accelerator operation state by the rider 1, and the like) when necessary. Each of the devices in the rider-assistance system 10 may exclusively be used for the rider-assistance system 10, or may be shared with another system. Here, the rider-assistance operation may be executed by using different information from the surrounding environment information of the mounted straddle-type vehicle 100.

The surrounding environment detector 11 detects position-related information of a target object around the mounted straddle-type vehicle 100. The position-related information means information relevant to a positional relationship, and includes, for example, information on a relative position, a relative distance, a relative speed, relative acceleration, a relative jerk, and the like between the target object and an object other than the target object. Examples of the surrounding environment detector 11 are a radar, a Lidar sensor, an ultrasonic sensor, and a camera. The surrounding environment detector 11 may be provided as a single unit or may be provided as plural units. The surrounding environment detector 11 may detect the surrounding environment information in front of the mounted straddle-type vehicle 100, may detect the surrounding environment information behind the mounted straddle-type vehicle 100, may detect the surrounding environment information on a side of the mounted straddle-type vehicle 100, or may detect a combination of any of those.

The travel state detector 12 includes a front-wheel rotational frequency sensor, a rear-wheel rotational frequency sensor, and the like, for example. Each of the front-wheel rotational frequency sensor and the rear-wheel rotational frequency sensor detects a rotational frequency of a wheel, and outputs a detection result. Each of the front-wheel rotational frequency sensor and the rear-wheel rotational frequency sensor may detect another physical quantity that can substantially be converted to the rotational frequency of the wheel.

In addition, the travel state detector 12 includes an inertial measurement unit, for example. The inertial measurement unit includes a three-axis gyroscope sensor and a three-directional acceleration sensor, and outputs detection results of three-axis acceleration and three-axis angular velocities of the mounted straddle-type vehicle 100. The inertial measurement unit may detect other physical quantities that can substantially be converted to the three-axis acceleration and the three-axis angular velocities. Alternatively, the inertial measurement unit may partially detect the three-axis acceleration and the three-axis angular velocities.

The travel state detector 12 further includes a braking force measurement unit, a drive power measurement unit, and the like, for example. For example, the braking force measurement unit outputs detection results such as an operation amount of a brake operation by the rider 1 and an actual braking force generated by a brake system 30. The braking force measurement unit may detect other physical quantities that can substantially be converted to the operation amount of the brake operation by the rider 1 and the actual braking force generated by the brake system 30. For example, the drive power measurement unit outputs detection results such as an operation amount of an accelerator operation by the rider 1 and actual drive power generated by a drive system 40. The drive power measurement unit may detect other physical quantities that can substantially be converted to the operation amount of the accelerator operation by the rider 1 and the actual drive power generated by the drive system 40.

The travel state detector 12 includes a receiver that receives a signal from a global positioning system (GPS) satellite and a storage section for map information, for example. Another configuration capable of detecting a position or an advancing direction of the mounted straddle-type vehicle 100 may be adopted.

The controller 20 includes an acquisition section 21, an execution section 22, and a communication section 23. The sections of the controller 20 may collectively be provided in a single casing or may separately be provided in plural casings. In addition, the controller 20 may partially or entirely be constructed of a microcomputer, a microprocessor unit, or the like, may be constructed of one whose firmware and the like can be updated, or may be a program module or the like that is executed by a command from a CPU or the like, for example.

The acquisition section 21 acquires the information that is output from each of the devices mounted to the mounted straddle-type vehicle 100, and outputs the acquired information to the execution section 22. The acquisition section 21 acquires the surrounding environment information of the mounted straddle-type vehicle 100 based on the output from the surrounding environment detector 11, and acquires the travel state information of the mounted straddle-type vehicle 100 based on output from the travel state detector 12 of the mounted straddle-type vehicle 100. The travel state information includes information on a speed, acceleration/deceleration, the position, the advancing direction, and the like of the mounted straddle-type vehicle 100, for example.

The execution section 22 outputs a signal to each of the various devices in the rider-assistance system 10 based on the various types of the information acquired by the acquisition section 21, and executes the rider-assistance operation to assist with the rider 1 of the mounted straddle-type vehicle 100. For example, the execution section 22 automatically controls the acceleration/deceleration generated to the mounted straddle-type vehicle 100 by outputting the signal to at least one of the brake system 30 and the drive system 40. In addition, for example, the execution section 22 warns the rider 1 by outputting the signal to a notification device 50.

The notification device 50 may warn the rider 1 by sound (that is, a sensation through an auditory organ as a sensory organ), may warn the rider 1 by a display (that is, a sensation through a visual organ as the sensory organ), may warn the rider 1 by a vibration (that is, a sensation through a tactile organ as the sensory organ), or may warn the rider 1 by a combination of those. The notification device 50 may be provided to the mounted straddle-type vehicle 100, may be provided to an accessory that is attached to the mounted straddle-type vehicle 100, or may be provided to an article such as a helmet or gloves worn by the rider 1. In addition, the notification device 50 may be constructed of a single output device or may be constructed of plural output devices of the same type or different types. Such plural output devices may be provided integrally or may be provided separately. Furthermore, the notification device 50 may warn the rider 1 by generating the instantaneous acceleration/deceleration to the mounted straddle-type vehicle 100. That is, the brake system 30, the drive system 40, and the like may be implemented as the notification device 50.

The communication section 23 transmits, to the rider-assistance system 110 assisting the rider 101 in driving the unmounted straddle-type vehicle 200, information based on the surrounding environment information of the mounted straddle-type vehicle 100 by wireless communication, and such information is used to execute the rider-assistance operation that assists with the rider 101. The communication section 23 may transmit the surrounding environment information itself acquired by the acquisition section 21, or may transmit information that is generated by execution of the rider-assistance operation when the execution section 22 executes the rider-assistance operation based on the surrounding environment information. The communication section 23 may transmit such information to the rider-assistance system 110 directly or indirectly via another medium (for example, an Internet server, a portable wireless terminal, or the like).

The rider-assistance system 110 executes the rider-assistance operation that assists with the rider 101 of the unmounted straddle-type vehicle 200 based on the information transmitted from the communication section 23 in the controller 20 of the rider-assistance system 10. The controller 120 receives detection results of various detectors (not illustrated) that output other types of information (for example, information on a brake operation state by the rider 101, information on an accelerator operation state by the rider 101, and the like) when necessary. Each of the devices in the rider-assistance system 110 may exclusively be used for the rider-assistance system 110, or may be shared with another system. In addition to the rider-assistance operation that is based on the information transmitted from the communication section 23 in the controller 20 of the rider-assistance system 10, the rider-assistance system 110 may execute the rider-assistance operation by using other types of information detected by various detectors of the unmounted straddle-type vehicle 200. Here, since the travel state detector 12, the brake system 30, the drive system 40, and the notification device 50 are the same as those in the rider-assistance system 10, a description thereon will not be made.

The controller 120 includes a communication section 121, an acquisition section 122, and an execution section 123. The sections of the controller 120 may collectively be provided in a single casing or may separately be provided in plural casings. In addition, the controller 120 may partially or entirely be constructed of a microcomputer, a microprocessor unit, or the like, may be constructed of one whose firmware and the like can be updated, or may be a program module or the like that is executed by a command from a CPU or the like, for example.

The communication section 121 receives, from the rider-assistance system 10 assisting the rider 1 in driving the mounted straddle-type vehicle 100, the information based on the surrounding environment information of the mounted straddle-type vehicle 100 by the wireless communication. The communication section 121 may receive such information from the communication section 23 in the controller 20 of the rider-assistance system 10 directly or indirectly via the other medium (for example, the Internet server, the portable wireless terminal, or the like).

The acquisition section 122 acquires the information that is output from the communication section 121 and each of the devices mounted to the unmounted straddle-type vehicle 200, and outputs the acquired information to the execution section 123. The acquisition section 122 acquires information based on the surrounding environment information of the mounted straddle-type vehicle 100 based on the output from the communication section 121, and acquires the travel state information of the unmounted straddle-type vehicle 200 based on the output from the travel state detector 12 of the unmounted straddle-type vehicle 200. The travel state information includes information on a speed, acceleration/deceleration, a position, an advancing direction, and the like of the unmounted straddle-type vehicle 200, for example.

The execution section 123 outputs a signal to each of the various devices in the rider-assistance system 110 based on the various types of the information acquired by the acquisition section 122, and executes the rider-assistance operation to assist with the rider 101 of the unmounted straddle-type vehicle 200. For example, the execution section 123 automatically controls the acceleration/deceleration generated to the unmounted straddle-type vehicle 200 by outputting the signal to at least one of the brake system 30 and the drive system 40. In addition, for example, the execution section 123 warns the rider 101 by outputting the signal to the notification device 50.

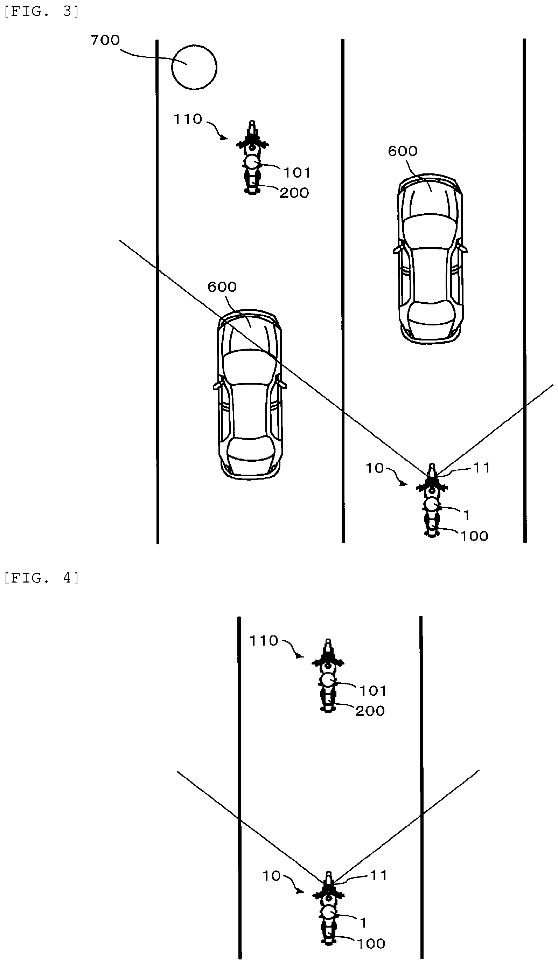

Fig. 3 is a view for explaining an example of a function of the comprehensive assistance system according to the embodiment of the present disclosure.

For example, as illustrated in Fig. 3, a case where the mounted straddle-type vehicle 100 travels behind the unmounted straddle-type vehicle 200 is assumed. The surrounding environment detector 11 of the rider-assistance system 10 detects position-related information of the unmounted straddle-type vehicle 200 as the target object with respect to a surrounding travel vehicle 600 as the target object. For example, the travel vehicle 600 is a vehicle that travels behind the unmounted straddle-type vehicle 200, a vehicle that travels on a side of the unmounted straddle-type vehicle 200, a vehicle that travels in front of the unmounted straddle-type vehicle 200, or the like. In such a case, in the case where it is determined that there is a high possibility of a collision or an approach between the unmounted straddle-type vehicle 200 and the travel vehicle 600 based on the detection result of the surrounding environment detector 11, the execution section 123 executes the rider-assistance operation to assist with the rider 101. Instead of the possibility of the collision or the approach between the unmounted straddle-type vehicle 200 and the travel vehicle 600, duration of the approach between the unmounted straddle-type vehicle 200 and the travel vehicle 600 may be determined. Alternatively, instead of the possibility of the collision or the approach between the unmounted straddle-type vehicle 200 and the travel vehicle 600, a possibility of a collision or an approach between the unmounted straddle-type vehicle 200 and an obstacle 700 may be determined. Examples of the obstacle 700 are a facility on a road (for example, a utility pole, a guardrail, or the like), a stopped vehicle, a pedestrian, an animal, a fallen object, and a defect of a road surface. Although Fig. 3 illustrates a case where the mounted straddle-type vehicle 100 travels in a different lane from a lane in which the unmounted straddle-type vehicle 200 travels, the mounted straddle-type vehicle 100 may travel in the same lane as the unmounted straddle-type vehicle 200. For example, the execution section 123 outputs a control command to cause the notification device 50 of the unmounted straddle-type vehicle 200 to output a warning so as to notify the rider 101 of the collision or the approach. Instead of or in addition to such a warning, the acceleration/deceleration of the unmounted straddle-type vehicle 200 may be controlled so as to avoid the collision or the approach. That is, the execution section 123 may output the control command to at least one of the brake system 30 and the drive system 40 so as to increase the acceleration or reduce the deceleration generated to the unmounted straddle-type vehicle 200. Here, the control of the acceleration/deceleration may be executed automatically in a state where none of the brake operation and the accelerator operation is not performed, or may automatically compensate for shortage of the operation in a state where at least one operation of the brake operation and the accelerator operation is performed. The execution section 22 may make the above-described determination, or the execution section 123 may make the above-described determination. The detection result of the travel state detector 12 in the rider-assistance system 110 may be taken into consideration for the determination. That is, the detection result of the travel state detector 12 in the rider-assistance system 110 may be acquired by the controller 20 via the communication section 23.

Fig. 4 is a view for explaining an example of the function of the comprehensive assistance system according to the embodiment of the present disclosure.

For example, as illustrated in Fig. 4, the case where the mounted straddle-type vehicle 100 travels behind the unmounted straddle-type vehicle 200 is assumed. The surrounding environment detector 11 of the rider-assistance system 10 detects the position-related information of the unmounted straddle-type vehicle 200 as the target object with respect to the mounted straddle-type vehicle 100. In such a case, in the case where it is determined that there is a high possibility of the collision or the approach between the mounted straddle-type vehicle 100 and the unmounted straddle-type vehicle 200 based on the detection result of the surrounding environment detector 11 and the detection result of the travel state detector 12 in the rider-assistance system 10, the execution section 123 executes the rider-assistance operation to assist with the rider 101. Instead of the possibility of the collision or the approach between the mounted straddle-type vehicle 100 and the unmounted straddle-type vehicle 200, duration of the approach between the mounted straddle-type vehicle 100 and the unmounted straddle-type vehicle 200 may be determined. Although Fig. 4 illustrates a case where the mounted straddle-type vehicle 100 travels in the same lane as the unmounted straddle-type vehicle 200, the mounted straddle-type vehicle 100 may travel in the different lane from the lane in which the unmounted straddle-type vehicle 200 travels. For example, the execution section 123 outputs the control command to cause the notification device 50 of the unmounted straddle-type vehicle 200 to output the warning so as to notify the rider 101 of the collision or the approach. In addition, the execution section 22 may output a control command to cause the notification device 50 of the mounted straddle-type vehicle 100 to output a warning so as to notify the rider 1 of the collision or the approach. Instead of or in addition to such a warning, the acceleration/deceleration of at least one of the unmounted straddle-type vehicle 200 and the mounted straddle-type vehicle 100 may be controlled so as to avoid the collision or the approach. That is, the execution section 123 may output the control command to at least one of the brake system 30 and the drive system 40 so as to increase the acceleration or reduce the deceleration generated to the unmounted straddle-type vehicle 200. In addition, the execution section 22 may output the control command to at least one of the brake system 30 and the drive system 40 so as to reduce the acceleration or increase the deceleration generated to the mounted straddle-type vehicle 100. Here, the control of the acceleration/deceleration may be executed automatically in the state where none of the brake operation and the accelerator operation is not performed, or may automatically compensate for the shortage of the operation in the state where at least one operation of the brake operation and the accelerator operation is performed. The execution section 22 may make the above-described determination, or the execution section 123 may make the above-described determination. The detection result of the travel state detector 12 in the rider-assistance system 110 may be taken into consideration for the determination. That is, the detection result of the travel state detector 12 in the rider-assistance system 110 may be acquired by the controller 20 via the communication section 23.

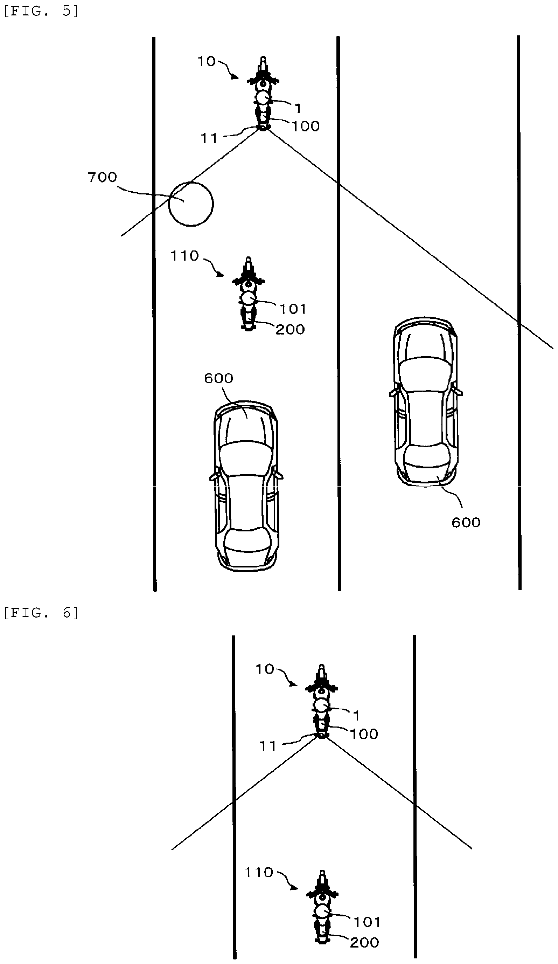

Fig. 5 is a view for explaining an example of the function of the comprehensive assistance system according to the embodiment of the present disclosure.

For example, as illustrated in Fig. 5, a case where the mounted straddle-type vehicle 100 travels in front of the unmounted straddle-type vehicle 200 is assumed. That is, the surrounding environment detector 11 of the rider-assistance system 10 detects the position-related information of the unmounted straddle-type vehicle 200 as the target object with respect to the surrounding travel vehicle 600 as the target object. In such a case, in the case where it is determined that there is the high possibility of the collision or the approach between the unmounted straddle-type vehicle 200 and the travel vehicle 600 based on the detection result of the surrounding environment detector 11, the execution section 123 executes the rider-assistance operation to assist with the rider 101. Instead of the possibility of the collision or the approach between the unmounted straddle-type vehicle 200 and the travel vehicle 600, the duration of the approach between the unmounted straddle-type vehicle 200 and the travel vehicle 600 may be determined. Alternatively, instead of the possibility of the collision or the approach between the unmounted straddle-type vehicle 200 and the travel vehicle 600, the possibility of the collision or the approach between the unmounted straddle-type vehicle 200 and the obstacle 700 may be determined. Examples of the obstacle 700 are the facility on the road (for example, the utility pole, the guardrail, or the like), the stopped vehicle, the pedestrian, the animal, the fallen object, and the defect of the road surface. Although Fig. 5 illustrates the case where the mounted straddle-type vehicle 100 travels in the same lane as the unmounted straddle-type vehicle 200, the mounted straddle-type vehicle 100 may travel in the different lane from the lane in which the unmounted straddle-type vehicle 200 travels. That is, even when the mounted straddle-type vehicle 100 travels in front of or on a side of the unmounted straddle-type vehicle 200, similar to the case where the mounted straddle-type vehicle 100 travels behind the unmounted straddle-type vehicle 200, the rider-assistance system 110 can execute the rider-assistance operation to assist with the rider 101.

Fig. 6 is a view for explaining an example of the function of the comprehensive assistance system according to the embodiment of the present disclosure.

For example, as illustrated in Fig. 6, the case where the mounted straddle-type vehicle 100 travels in front of the unmounted straddle-type vehicle 200 is assumed. That is, the surrounding environment detector 11 of the rider-assistance system 10 detects the position-related information of the unmounted straddle-type vehicle 200 as the target object with respect to the mounted straddle-type vehicle 100. In such a case, in the case where it is determined that there is the high possibility of the collision or the approach between the mounted straddle-type vehicle 100 and the unmounted straddle-type vehicle 200 based on the detection result of the surrounding environment detector 11 and the detection result of the travel state detector 12 in the rider-assistance system 10, the execution section 123 executes the rider-assistance operation to assist with the rider 101. Instead of the possibility of the collision or the approach between the mounted straddle-type vehicle 100 and the unmounted straddle-type vehicle 200, the duration of the approach between the mounted straddle-type vehicle 100 and the unmounted straddle-type vehicle 200 may be determined. Although Fig. 6 illustrates the case where the mounted straddle-type vehicle 100 travels in the same lane as the unmounted straddle-type vehicle 200, the mounted straddle-type vehicle 100 may travel in the different lane from the lane in which the unmounted straddle-type vehicle 200 travels. That is, even when the mounted straddle-type vehicle 100 travels in front of or on the side of the unmounted straddle-type vehicle 200, similar to the case where the mounted straddle-type vehicle 100 travels behind the unmounted straddle-type vehicle 200, the rider-assistance system 110 can execute the rider-assistance operation to assist with the rider 101.

For example, as illustrated in Fig. 6, in a situation where the mounted straddle-type vehicle 100 travels in front of the unmounted straddle-type vehicle 200, the rider-assistance system 110 causes the unmounted straddle-type vehicle 200 to execute automatic cruise operation based on the position-related information of the unmounted straddle-type vehicle 200 with respect to the mounted straddle-type vehicle 100, which is acquired by using the surrounding environment detector 11. The automatic cruise operation is operation for automatically controlling the acceleration/deceleration of the unmounted straddle-type vehicle 200 without relying on an accelerating/decelerating operation by the rider 101. The automatic cruise operation includes cruise control operation and adaptive cruise control operation. In the cruise control operation, the acceleration/deceleration of the unmounted straddle-type vehicle 200 is controlled by the controller 120 such that the unmounted straddle-type vehicle 200 travels at a set target speed. Meanwhile, in the adaptive cruise control operation, in addition to such control, an inter-vehicular distance from or collision avoidance performance with a preceding vehicle is maintained. That is, in the adaptive cruise control operation, in the case where the preceding vehicle is not present, the acceleration/deceleration of the unmounted straddle-type vehicle 200 is controlled by the controller 120 such that the unmounted straddle-type vehicle 200 travels at the set target speed. On the other hand, in the case where the preceding vehicle is present, the acceleration/deceleration of the unmounted straddle-type vehicle 200 is controlled by the controller 120 such that the unmounted straddle-type vehicle 200 travels at a speed that is equal to or lower than the target speed and that aims to maintain the inter-vehicular distance from or the collision avoidance performance with the preceding vehicle. For example, in the case where the mounted straddle-type vehicle 100 executes the cruise control operation, the surrounding environment detector 11 of the rider-assistance system 10 detects the position-related information of the unmounted straddle-type vehicle 200 as the target object with respect to the mounted straddle-type vehicle 100. Then, in order to maintain the inter-vehicular distance or the collision avoidance performance between the unmounted straddle-type vehicle 200 and the mounted straddle-type vehicle 100, the execution section 123 outputs the control command to at least one of the brake system 30 and the drive system 40 of the unmounted straddle-type vehicle 200. Consequently, the rider-assistance system 110 executes the cruise control operation of the unmounted straddle-type vehicle 200. Meanwhile, in the case where the mounted straddle-type vehicle 100 does not execute the automatic cruise operation, or in the case where the mounted straddle-type vehicle 100 executes the adaptive cruise control operation based on the surrounding environment information of an area in front of the mounted straddle-type vehicle 100 acquired by using another surrounding environment detector 11, the surrounding environment detector 11 of the rider-assistance system 10 detects the position-related information of the unmounted straddle-type vehicle 200 as the target object with respect to the mounted straddle-type vehicle 100. Then, in order to maintain the inter-vehicular distance or the collision avoidance performance between the unmounted straddle-type vehicle 200 and the mounted straddle-type vehicle 100, the execution section 123 outputs the control command to at least one of the brake system 30 and the drive system 40 of the unmounted straddle-type vehicle 200. Consequently, the rider-assistance system 110 executes the adaptive cruise control operation of the unmounted straddle-type vehicle 200. In the mounted straddle-type vehicle 100, the rider 1 may be able to change at least one of on/off of the adaptive cruise control operation, the target speed, the inter-vehicular distance, and the collision avoidance performance of the unmounted straddle-type vehicle 200. Alternatively, in the unmounted straddle-type vehicle 200, the rider 101 may be able to change at least one of those. Both of the rider 1 and the rider 101 may be able to change at least one of those. In the case where, in the mounted straddle-type vehicle 100, the rider 1 can change at least one of the on/off, the target speed, the inter-vehicular distance, and the collision avoidance performance, a permission operation by the rider 101 in the unmounted straddle-type vehicle 200 may be set as a change condition. In addition, in the unmounted straddle-type vehicle 200, the rider 101 may be able to change at least one of on/off of the cruise control operation, on/off of the adaptive cruise control operation, the target speed, the inter-vehicular distance, and the collision avoidance performance of the mounted straddle-type vehicle 100. In the case where, in the unmounted straddle-type vehicle 200, the rider 101 can change at least one of the on/off, the target speed, the inter-vehicular distance, and the collision avoidance performance, a permission operation by the rider 1 in the mounted straddle-type vehicle 100 may be set as a change condition.

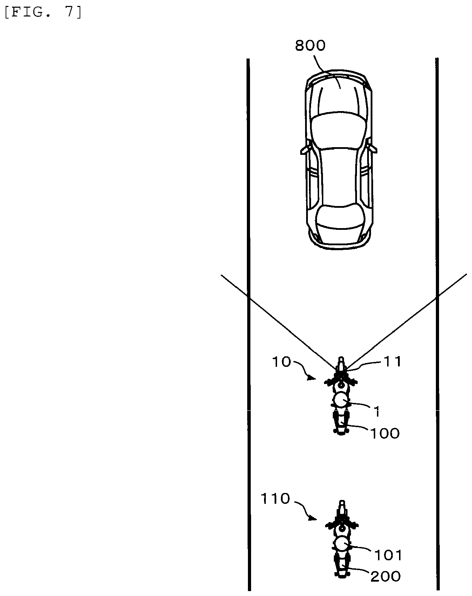

Fig. 7 is a view for explaining an example of the function of the comprehensive assistance system according to the embodiment of the present disclosure.

For example, as illustrated in Fig. 7, in the situation where the mounted straddle-type vehicle 100 travels in front of the unmounted straddle-type vehicle 200, the rider-assistance system 110 causes the unmounted straddle-type vehicle 200 to execute the automatic cruise operation based on position-related information of a preceding vehicle 800 in front of the mounted straddle-type vehicle 100 with respect to the mounted straddle-type vehicle 100, which is acquired by using the surrounding environment detector 11. For example, in the case where the mounted straddle-type vehicle 100 executes the adaptive cruise control operation based on the surrounding environment information of the area in front, which is acquired by using the surrounding environment detector 11, the acquisition section 122 acquires the information on the speed of the mounted straddle-type vehicle 100, that is, the information based on the surrounding environment information of the mounted straddle-type vehicle 100 via the communication section 121. Then, in order to make the speed of the unmounted straddle-type vehicle 200 and the speed of the mounted straddle-type vehicle 100 match each other, the execution section 123 outputs the control command to at least one of the brake system 30 and the drive system 40 of the unmounted straddle-type vehicle 200. Consequently, the rider-assistance system 110 executes the adaptive cruise control operation of the unmounted straddle-type vehicle 200. At the time, the information on the positions of the mounted straddle-type vehicle 100 and the unmounted straddle-type vehicle 200 may be acquired based on the detection results of the travel state detectors 12, so as to maintain the inter-vehicular distance or the collision avoidance performance between the unmounted straddle-type vehicle 200 and the mounted straddle-type vehicle 100. In the mounted straddle-type vehicle 100, the rider 1 may be able to change at least one of the on/off of the adaptive cruise control operation, the inter-vehicular distance, and the collision avoidance performance of the unmounted straddle-type vehicle 200. Alternatively, in the unmounted straddle-type vehicle 200, the rider 101 may be able to change at least one of those. Both of the rider 1 and the rider 101 may be able to change at least one of those. In the case where, in the mounted straddle-type vehicle 100, the rider 1 can change at least one of the on/off, the inter-vehicular distance, and the collision avoidance performance, the permission operation by the rider 101 in the unmounted straddle-type vehicle 200 may be set as the change condition. In addition, in the unmounted straddle-type vehicle 200, the rider 101 may be able to change at least one of the on/off of the adaptive cruise control operation, the target speed, the inter-vehicular distance, and the collision avoidance performance of the mounted straddle-type vehicle 100. In the case where, in the unmounted straddle-type vehicle 200, the rider 101 can change at least one of the on/off, the target speed, the inter-vehicular distance, and the collision avoidance performance, the permission operation by the rider 1 in the mounted straddle-type vehicle 100 may be set as the change condition. Here, when the execution section 123 causes the unmounted straddle-type vehicle 200 to execute the adaptive cruise control operation based on the position-related information of the preceding vehicle 800 with respect to the mounted straddle-type vehicle 100, the position-related information of the unmounted straddle-type vehicle 200 as the target object with respect to the mounted straddle-type vehicle 100, which is acquired by using the other surrounding environment detector 11 of the rider-assistance system 10, may be taken into consideration. In addition, in the case where the mounted straddle-type vehicle 100 executes the cruise control operation, the acquisition section 122 may acquire the information on the speed of the mounted straddle-type vehicle 100 via the communication section 121, and the execution section 123 may thereby cause the rider-assistance system 110 to execute the cruise control operation. In the mounted straddle-type vehicle 100, the rider 1 may be able to change the on/off of the cruise control operation of the unmounted straddle-type vehicle 200. Alternatively, in the unmounted straddle-type vehicle 200, the rider 101 may be able to change such on/off. Both of the rider 1 and the rider 101 may be able to change such on/off. In the case where, in the mounted straddle-type vehicle 100, the rider 1 can change the on/off, the permission operation by the rider 101 in the unmounted straddle-type vehicle 200 may be set as the change condition. In addition, in the unmounted straddle-type vehicle 200, the rider 101 may be able to change the on/off of the cruise control operation of the mounted straddle-type vehicle 100. In the case where, in the unmounted straddle-type vehicle 200, the rider 101 can change the on/off, the permission operation by the rider 1 in the mounted straddle-type vehicle 100 may be set as the change condition.

### < Operation of Comprehensive Assistance System>

A description will be made on operation of the comprehensive assistance system according to the embodiment.

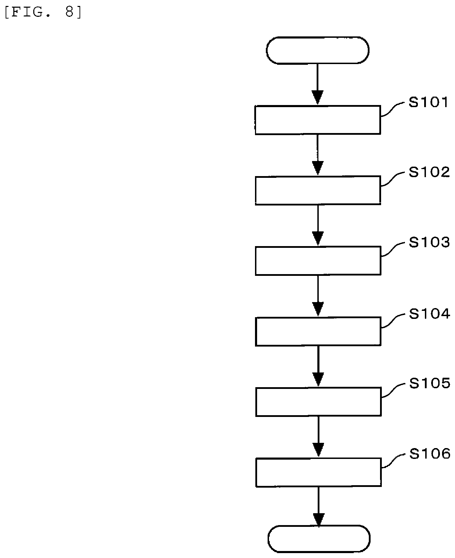

Fig. 8 is a chart for explaining an example of the operation of the comprehensive assistance system according to the embodiment of the present disclosure. An order of steps may appropriately be switched, any of the steps may appropriately be omitted, or an another step may appropriately be added.

The comprehensive assistance system 500 executes the operation illustrated in Fig. 8 during the travel of the mounted straddle-type vehicle 100 and the unmounted straddle-type vehicle 200.

### (Acquisition Step)

In step S101, the acquisition section 21 in the controller 20 of the rider-assistance system 10 acquires the surrounding environment information based on the output from the surrounding environment detector 11, and acquires the travel state information of the mounted straddle-type vehicle 100 based on the output from the travel state detector 12 of the mounted straddle-type vehicle 100.

### (Execution Step)

Next, in step S102, the execution section 22 in the controller 20 of the rider-assistance system 10 outputs the signal to each of the various devices in the rider-assistance system 10 based on the various types of the information acquired in step S101, and executes the rider-assistance operation to assist with the rider 1 of the mounted straddle-type vehicle 100.

### (Communication Step)

Next, in step S103, the communication section 23 in the controller 20 of the rider-assistance system 10 transmits, to the rider-assistance system 110 assisting the rider 101 in driving the unmounted straddle-type vehicle 200, the information based on the surrounding environment information of the mounted straddle-type vehicle 100 by the wireless communication, and such information is used to execute the rider-assistance operation that assists with the rider 101.

### (Communication Step)

Next, in step S104, the communication section 121 in the controller 120 of the rider-assistance system 110 receives, from the rider-assistance system 10 assisting the rider 1 in driving the mounted straddle-type vehicle 100, the information based on the surrounding environment information of the mounted straddle-type vehicle 100 by the wireless communication.

### (Acquisition Step)

Next, in step S105, the acquisition section 122 in the controller 120 of the rider-assistance system 110 acquires the information, which is based on the surrounding environment information of the mounted straddle-type vehicle 100, based on the output from the communication section 121, and acquires the travel state information of the unmounted straddle-type vehicle 200 based on the output from the travel state detector 12 of the unmounted straddle-type vehicle 200.

### (Execution Step)

Next, in step S106, the execution section 123 in the controller 120 of the rider-assistance system 110 outputs the signal to each of the various devices in the rider-assistance system 110 based on the various types of the information acquired in step S105, and executes the rider-assistance operation to assist with the rider 101 of the unmounted straddle-type vehicle 200.

### <Effects of Comprehensive Assistance System>

A description will be made on effects of the comprehensive assistance system according to the embodiment.

In the comprehensive assistance system 500, the information based on the surrounding environment information of the mounted straddle-type vehicle 100 is transmitted from the rider-assistance system 10, which assists the rider 1 in driving the mounted straddle-type vehicle 100, to the controller 120 of the rider-assistance system 110, which assists the rider 101 in driving the unmounted straddle-type vehicle 200. Thus, it is possible to assist the rider 101 in driving the unmounted straddle-type vehicle 200.

Preferably, only in the case where the mounted straddle-type vehicle 100 is the vehicle that is set in the unmounted straddle-type vehicle 200 as the vehicle traveling in the same group, and/or only in the case where the unmounted straddle-type vehicle 200 is the vehicle that is set in the mounted straddle-type vehicle 100 as the vehicle traveling in the same group, the rider-assistance system 110 may execute the rider-assistance operation using the information based on the surrounding environment information of the mounted straddle-type vehicle 100. With such a configuration, the rider 101 can be assisted appropriately in driving the unmounted straddle-type vehicle 200.

The embodiment of the present disclosure is not limited to that in the above description. That is, the present disclosure includes modes in each of which the embodiment that has been described so far is modified. In addition, the present disclosure includes a mode in which the embodiment that has been described so far is only partially implemented or a mode in which the modes are combined.

### Reference Number List

1, 101: Rider
10, 110: Rider-assistance system
11: Surrounding environment detector
12: Travel state detector
20, 120: Controller
21, 122: Acquisition section
22, 123: Execution section
23, 121: Communication section
30: Brake system
40: Drive system
50: Notification device
100, 200: Straddle-type vehicle
500: Comprehensive assistance system
600: Travel vehicle
700: Obstacle
800: Preceding vehicle

## Claims

1. A controller (120) for a first rider-assistance system (110) of a first straddle-type vehicle (200), the first rider-assistance system (110) configured to assist a first rider (101) in driving the first straddle-type vehicle (200), the controller (120) comprising:
an execution section (123) that is configured to cause the first rider-assistance system (110) to execute a rider-assistance operation for assisting the first rider (101); and
a communication section (121) that is configured to receive information from a second rider-assistance system (10) of a second straddle-type vehicle (100) directly or indirectly by wireless communication, the information being based on surrounding environment information of the second straddle-type vehicle (100), the second straddle-type vehicle (100) having the second rider-assistance system (10) that is configured to assist a second rider (1) in driving the second straddle-type vehicle (100) and a surrounding environment detector (11) that is configured to detect a position-related information of a surrounding target object near the second straddle-type vehicle (100), wherein
the execution section (123) causes the first rider-assistance system (110) to execute the rider-assistance operation in response to the information received by the communication section (121),
**characterized in that**
the second straddle-type vehicle (100) is a vehicle that is traveling behind or in front of the first straddle-type vehicle (200) in a group, and
the target object is a third traveling vehicle (600) near to the first straddle-type vehicle (200) and the second straddle-type vehicle (100) or the first straddle-type vehicle (200).

2. The controller (120) according to claim 1, wherein
the rider-assistance operation outputs a warning to the first rider (101) in response to the information received by the communication section (121).

3. The controller (120) according to claim 2, wherein
the warning warns the first straddle-type vehicle (200) that the first straddle-type vehicle (200) possibly collides with the third vehicle (600) traveling near the first straddle-type vehicle (200) or that the first straddle-type vehicle (200) is approaching the third vehicle (600) traveling near the first straddle-type vehicle (200).

4. The controller (120) according to any one of claims 2 to 3, wherein
the warning warns the first straddle-type vehicle (200) that the first straddle-type vehicle (200) possibly collides with the second straddle-type vehicle (200) or that the first straddle-type vehicle (200) is approaching the second straddle-type vehicle (100).

5. The controller (120) according to any one of claims 1 to 4, wherein
the rider-assistance operation automatically controls a brake system (30) of the first straddle-type vehicle (200) in response to the information received by the communication section (121).

6. The controller (120) according to any one of claims 1 to 5, wherein
the rider-assistance operation automatically controls a drive system (40) of the first straddle-type vehicle (200) in response to the information received by the communication section (121).

7. The controller (120) according to any one of claims 1 to 6, wherein
the rider-assistance operation causes the first straddle-type vehicle (200) to execute an automatic cruise operation in response to the information received by the communication section (121).

8. The controller (120) according to claim 7, wherein
in the automatic cruise operation, acceleration/deceleration of the first straddle-type vehicle (200) is controlled based on relative position-related information between the second straddle-type vehicle (100) and the first straddle-type vehicle (200).

9. The controller (120) according to claim 7 or 8, wherein
the automatic cruise operation is adaptive cruise control operation, and
in the adaptive cruise control operation, the acceleration/deceleration of the first straddle-type vehicle (200) is controlled based on relative position-related information between the second straddle-type vehicle (100) and a preceding vehicle (800) of the second straddle-type vehicle (100).

10. A controller (20) for a second rider-assistance system (10) of a second straddle-type vehicle (100) that has a surrounding environment detector (11) configured to detect position-related information of a target object in surroundings, the second rider-assistance system (10) configured to assist a second rider (1) in driving the second straddle-type vehicle (100), the controller (20) comprising:
an acquisition section (21) that is configured to acquire surrounding environment information of the second straddle-type vehicle (100) based on output of the surrounding environment detector (11), and further comprising:
a communication section (23) that is configured to transmit information, directly or indirectly by wireless communication, to a first rider-assistance system (110) of a first straddle-type vehicle (200) having no surrounding environment detector configured to detect position-related information of a target object in the surroundings, the information being based on the surrounding environment information of the second straddle-type vehicle (100) and being to be used to execute a rider-assistance operation assisting a first rider (101) in driving the first straddle-type vehicle (200),
**characterized in that**
the first straddle-type vehicle (200) is a vehicle that is traveling behind or in front of the second straddle-type vehicle (100) in a group, and
the target object is a third traveling vehicle (600) near to the first straddle-type vehicle (200) and the second straddle-type vehicle (100) or the first straddle-type vehicle (200).

11. A control method for a first rider-assistance system (110) of a first straddle-type vehicle (200), the first rider-assistance system (110) configured to assist a first rider (101) in driving the first straddle-type vehicle (200), the control method comprising:
executing (S106) a rider-assistance operation that assists the first rider (101) in a manner that an execution section (123) of a controller (120) causes the first rider-assistance system (110) to execute the rider-assistance operation; and
receiving (S104) information from a second rider-assistance system (10) of the second straddle-type vehicle (100) in a manner that a communication section (121) of the controller (120) receives the information from the second rider-assistance system (10) directly or indirectly by wireless communication, the information being based on surrounding environment information of the second straddle-type vehicle (100), the second straddle-type vehicle (100) that has a surrounding environment detector (11) configured to detect a position-related information of a target object in the surroundings, the second rider-assistance system (10) configured to assists a second rider (1) in driving the second straddle-type vehicle (100),
wherein the execution section (123) causes the first rider-assistance system (110) to execute the rider-assistance operation based on the information received by the communication section (121),
**characterized in that**
the second straddle-type vehicle (100) is a vehicle that is traveling behind or in front of the first straddle-type vehicle (200) in a group, and
the target object is a third traveling vehicle (600) near to the first straddle-type vehicle (200) and the second straddle-type vehicle (100) or the first straddle-type vehicle (200).

12. A control method for a second rider-assistance system (10) of a second straddle-type vehicle (100) having a surrounding environment detector (11) that is configured to detect position-related information of a target object in surroundings, the second rider-assistance system (10) configured to assist a second rider (1) in driving the second straddle-type vehicle (100), the control method comprising:
acquiring (S101), by using an acquisition section (21) of a controller (20), a surrounding environment information of the second straddle-type vehicle (100) in response to an output from the surrounding environment detector (11); and
transmitting (S103) information to a first rider-assistance system (110) of a first straddle-type vehicle (200) in a manner that a communication section (23) of the controller (20) transmits the information to the first rider-assistance system (110) directly or indirectly via wireless communication, the information being based on the surrounding environment information of the second straddle-type vehicle (100) and being to be used to execute, by the first rider-assistance system (110), a rider-assistance operation assisting a first rider (101) in driving the first straddle-type vehicle (200), the first straddle-type vehicle (200) having no surrounding environment detector that is configured to detect position-related information of a target object in the surroundings,
**characterized in that**
the first straddle-type vehicle (200) is a vehicle that is traveling behind or in front of the second straddle-type vehicle (100) in a group, and
the target object is a third traveling vehicle (600) near to the first straddle-type vehicle (200) and the second straddle-type vehicle (100) or the first straddle-type vehicle (200).
